# EUROPEAN PATENT APPLICATION

(11) **EP 2 717 615 A1**
(43) Date of publication of application: **09.04.2014**
(21) Application number: 11866605.6
(22) Date of filing: 03.06.2011
(51) Int. Cl.: H04W 24/10

(54) **COMMUNICATION CONTROL METHOD, DEVICE AND PROGRAM, AND MEASUREMENT DEVICE**

(71) Applicant: Fujitsu Limited, Kawasaki-shi, Kanagawa 211-8588 (JP)
(72) Inventor: MOUE, Hiroki, Kawasaki-shi Kanagawa 211-8588 (JP)
(74) Representative: HOFFMANN EITLE
(86) International application number: PCT/JP2011/062778
(87) International publication number: WO 2012/164739

(57) **Abstract**

A communication control method includes: (A) receiving measurement data of one measurement device among plural measurement devices; (B) calculating an indicator value that represents a relationship between the measurement data of the one measurement device and measurement data of the plural measurement devices; and (C) transmitting data for changing a transmission frequency of measurement data to at least one of the plural measurement devices, based on the calculated indicator value. Accordingly, it becomes possible to reduce the useless processing cost in the computer, and utilize the bandwidth of the network effectively.

## Description

### Technical Field

This technique relates to a technique for controlling an amount of communication data.

### Background Technology

The Complex Event Processing (CEP) is known as a method for collecting and analyzing event data that is constantly occurring (data such as market data or weather data) . In the CEP, a CEP engine that executes CEP stores event data that was collected during the most recent period in a memory, and performs a simple processing at high speed. According to the CEP, it is possible to perform a processing at a much higher speed than a case where, after event data has once been saved in a database, the event data is read out again and then processed. However, a problem in the CEP is that there is no appropriate mechanism for controlling the amount of event data that the CEP engine receives.

Conventionally, there has been a technique such as described below as a technique for processing data collected from a sensor by a computer. More specifically, there is a technique in which by identifying sensors that are invalid for estimating the user status among sensors that are mounted on a user terminal, and deleting observed values from the identified sensors, only the observed values that are valid for estimating the user status are used for estimating the user status. However, in this technique, it is considered that setting of the transmission interval of the event data is made in advance, however, controlling the amount of data that a sensor transmits is not considerd.

Moreover, there is also a technique such as described below. More specifically, there is a technique for using data obtained from sensors in order to manage the location and behavior of moving objects such as wild animals, people, vehicles and the like that are located in an area where communication by a public mobile communication information network is not possible. In this technique, because data is transmitted or received at preset intervals, or data is transmitted or received based on a polling function and the like, it is impossible to suitably control the amount of communication data that is communicated between sensors and an apparatus for managing data.

Furthermore, there is also a technique such as described below. More specifically, there is a technique in which air pollutant sensors are mounted on a sensor station, and the sensor station controls the power supply that drives the air pollutant sensors. However, this technique controls the supply of electric power with the objective of conserving electric power, and is not for directly controlling the amount of data that is transmitted from the sensors.

### Prior technical documents

### Patent Documents

Patent Document 1: Japanese Laid-open Patent Publication No. 2010-122751
Patent Document 2: Japanese Laid-open Patent Publication No. 2007-129654
Patent Document 3: Japanese Laid-open Patent Publication No. 2005-301835

### Summary of the Invention

### Object to be solved by the Invention

Therefore, as one aspect, an object of this invention is to provide technique for appropriately controlling the amount of collected data in a system for collecting and processing the data.

### Means for solving the Problem

A communication control method relating to a first aspect of this technique includes: (A) receiving measurement data of one measurement device among plural measurement devices from the one measurement device; (B) calculating an indicator value that represents a relationship between the measurement data of the one measurement device and measurement data of the plural measurement devices; and (C) transmitting data for changing a transmission frequency of measurement data to at least one of the plural measurement devices, based on the calculated indicator value.

A communication control method relating to a second aspect of the technique includes: (E) upon receiving data for changing a transmission frequency of measurement data from a computer that performs a processing to collect the measurement data, changing the transmission frequency of the measurement data according to the received data; (F) upon receiving a condition to return the transmission frequency to an original transmission frequency from the computer, monitoring whether or not the condition is satisfied; and (G) upon detecting that the condition has been satisfied, returning the transmission frequency to the original transmission frequency.

### Brief description of the drawings

FIG. 1 is a diagram depicting a system outline relating to a first embodiment;
FIG. 2 is a functional block diagram of a computer relating to the first embodiment;
FIG. 3 is a functional block diagram of a measurement device relating to the first embodiment;
FIG. 4 is a diagram depicting a processing flow of a processing executed by the computer relating to the first embodiment;
FIG. 5 is a diagram depicting a processing flow of a processing executed by the measurement device relating to the first embodiment;
FIG. 6 is a system outline diagram relating to a second embodiment;
FIG. 7 is a functional block diagram of a CEP engine relating to the second embodiment;
FIG. 8 is a functional block diagram of a sensor relating to the second embodiment;
FIG. 9 is a diagram depicting an example of data stored in a management data storage unit relating to the second embodiment;
FIG. 10 is a diagram depicting an example of data stored in a sensor data storage unit relating to the second embodiment;
FIG. 11 is a diagram to explain an outline of a processing executed in a system relating to the second embodiment;
FIG. 12 is a diagram depicting a processing flow of a transmission processing relating to the second embodiment;
FIG. 13 is a diagram depicting a processing flow of a flag setting processing relating to the second embodiment;
FIG. 14 is a diagram depicting a processing flow of a determination processing relating to the second embodiment;
FIG. 15 is a diagram depicting a processing flow of a processing executed by the CEP engine relating to the second embodiment;
FIG. 16 is a diagram depicting a processing flowof a processing executed by the CEP engine relating to the second embodiment;
FIG. 17 is a diagram depicting a processing flow of a determination processing relating to a third embodiment;
FIG. 18 is a diagram depicting an example of data stored in a sensor data storage unit relating to the third embodiment;
FIG. 19 is a diagram depicting a processing flow of the determination processing relating to the fourth embodiment;
FIG. 20 is a diagram depicting an example of data stored in the sensor data storage unit relating to a fourth embodiment;
FIG. 21 is a diagram depicting an example of data stored in the sensor data storage unit relating to the fifth embodiment; and
FIG. 22 is a functional block diagram of the computer.

### Mode for carrying out the invention

### [Embodiment 1]

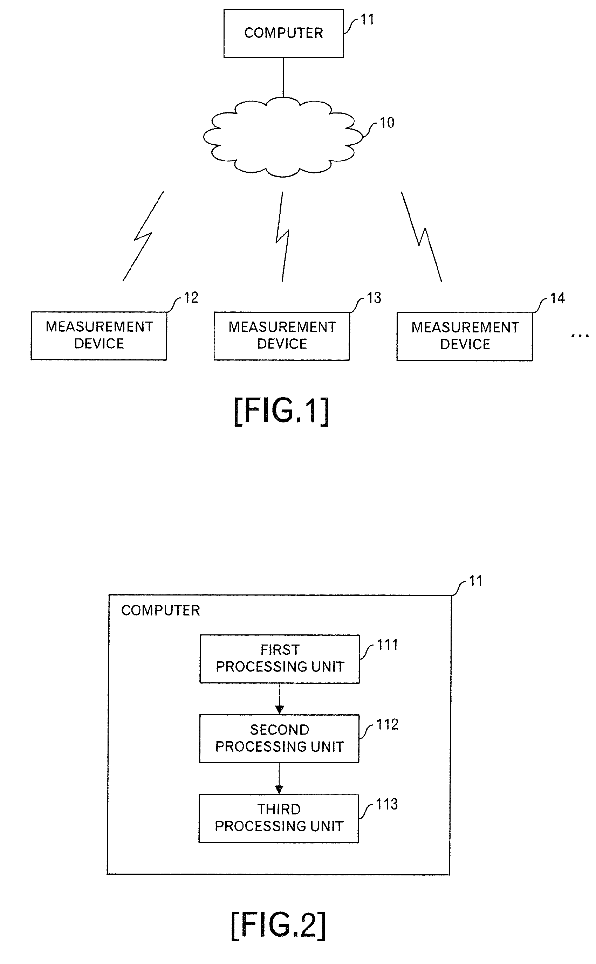

FIG. 1 illustrates a system relating to a first embodiment. Measurement devices 12 to 14 are connected to a computer 11 by way of a network 10, which is a network such as the Internet or the like, using a wired or wireless connection. The measurement devices 12 to 14 measure data (for example, position data, or weather data) and transmits the measured data (hereafter, called measurement data) to the computer 11. The computer 11 performs predetermined analysis for the measurement data that was received from the measurement devices 12 to 14, and outputs the analysis results. In FIG. 1, only three measurement devices are illustrated, however, the number of measurement devices is not limited.

FIG. 2 illustrates functional blocks of the computer 11 illustrated in FIG. 1. In the example in FIG. 2, the computer 11 includes a first processing unit 111, a second processing unit 112 and a third processing unit 113.

The first processing unit 111 receives data from the measurement devices 12 to 14, and outputs the received data to the second processing unit 112. The second processing unit 112 performs a processing using data that was received from the first processing unit 111, and outputs the processing results to the third processing unit 113. The third processing unit 113 generates data for changing the transmission frequency of the measurement data according to the data received from the second processing unit 113, and performs a processing for transmitting data to at least one of the measurement devices 12 to 14.

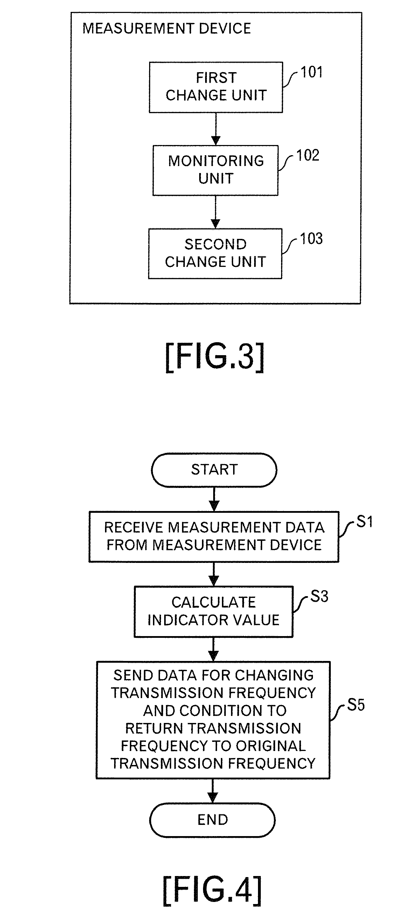

FIG. 3 illustrates function blocks of the measurement devices 12 to 14 illustrated in FIG. 1. In the example in FIG. 3, the measurement device 12 includes a first change unit 101, a monitoring unit 102 and a second change unit 103.

The first change unit 101 uses data that was received from the computer 11 to perform a processing to change the transmission frequency of the measurement data. The first change unit 101 also outputs the received data to the monitoring unit 102. The monitoring unit 102 performs a processing using data that was received from the first change unit 101, and outputs the processing result to the second change unit 103. The second change unit 103 uses data received from the monitoring unit 102 to perform a processing for returning the transmission frequency to the original transmission frequency of the measurement data. The measurement data is transmitted by a transmitter to the computer 11.

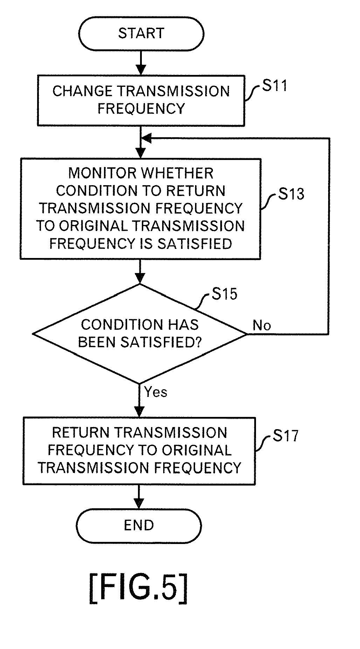

Next, FIG. 4 and FIG. 5 will be used to explain the processing that is performed in the system illustrated in FIG. 1. First, FIG. 4 will be used to explain the processing that is performed by the computer 11.

First, the first processing unit 111 in the computer 11 receives measurement data from one of the measurement devices 12 to 14 (here, this will be taken to be the measurement device 12) (FIG. 4: step S1). Then, the first processing unit 111 outputs the receivedmeasurement data to the secondprocessing unit 112.

The second processing unit 112 then calculates an indicator value that represents the relationship between the measurement data that was received from the first processing unit 111 and the measurement data of the measurement device 13 and the measurement device 14, which is stored in a memory unit (step S3). The indicator value is, for example, an indicator value concerning the density of the measurement devices, or an indicator value concerning the distance between the measurement devices. The second processing unit 112 also outputs the calculated indicator value to the third processing unit 113.

The third processing unit 113 then transmits data for changing the transmission frequency of the measurement data, and a condition to return the transmission frequency to the original transmission frequency to at least one of the measurement devices 12 to 14, based on the indicator value that was received from the second processing unit 112 (step S5). Here, for example, the third processing unit 113 transmits the aforementioned data to the measurement device that is the transmission source of the measurement data. The processing then ends.

By performing the processing such as described above, the computer 11 is able to suitably control the amount of measurement data to be received.

Next, a processing performed by the measurement devices 12 to 14 will be explained using FIG. 5. Here, for convenience, the processing performed by the measurement device 12 will be explained as an example.

First, the first change unit 101 in the measurement device 12 receives data for changing the transmission frequency of the measurement data, and a condition to return the transmission frequency to the original transmission frequency from the computer 11. Then, the first change unit 101 changes the transmission frequency that the transmitter transmits the measurement data according to the data for changing the transmission frequency of measurement data (FIG. 5: step S11). For example, the first change unit 101 notifies the transmitter of a new transmission frequency. Moreover, the first change unit 101 outputs a condition to return the transmission frequency to an original transmission frequency to the monitoring unit 102.

The monitoring unit 102 then monitors whether or not the condition to return the transmission frequency to the original transmission frequency of the measurement data has been satisfied (step S13) . When the monitoring unit 102 has detected that the condition to return the transmission frequency to the original transmission frequency of the measurement data has been satisfied, the monitoring unit 102 outputs a notification to that effect to the second change unit 103.

When the condition to return the transmission frequency to the original transmission frequency of the measurement data is not satisfied (step S15: NO route), the processing returns to the step S13. On the other hand, when it is detected that the condition to return the transmission frequency to the original transmission frequency of the measurement data has been satisfied (step S15: YES route), the second change unit 103 performs a processing for returning the transmission frequency to the original transmission frequency (step S17) . For example, the second change unit 103 notifies the transmitter of the original transmission frequency. The processing then ends.

By performing the processing described above, it becomes possible to suitably control the amount of measurement data that the measurement device transmits to the computer 11.

### [Embodiment 2]

As was described in the description of the background art, a CEP system has a problem in that there is no adequate way of controlling, depending on the conditions, the amount of event data that the CEP engine receives.

For example, the case where plural sensors measure event data while moving will be considered. In this case, when the sensors become concentrated, a large amount of meaningless data for analysis is transmitted to the CEP engine, so useless costs occur for transmitting and receiving and analyzing data. Moreover, when a large amount of data is transmitted when the sensors are concentrated, congestion in a certain transmission path may occur, and measurement data may become lost. Furthermore, when a sensor detects that transmission of measurement data is not being suitably performed, transmission may be stopped once and then started again. This causes the congestion to become even worse.

Therefore, in this second embodiment, this problem will be dealt with by performing a processing such as described below.

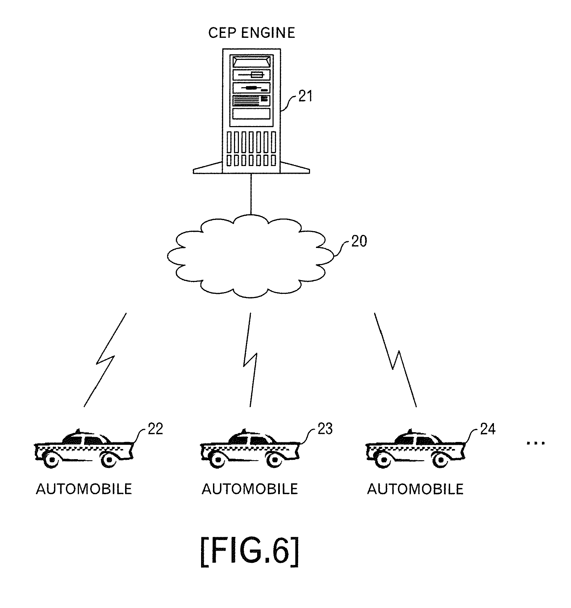

FIG. 6 illustrates a system relating to this second embodiment. In this second embodiment, communication is performed between a CEP engine 21 that executes CEP and sensors that are mounted inautomobiles 22 to 24. More specifically, the CEP engine 21 is connected to a network 20 such as the Internet by a wired or wireless connection, and the sensors that are mounted in the automobiles are connected to that network 20 by a wireless connection.

As the automobiles 22 to 24 repeatedly move and stop, the mounted sensors measure event data (for example, temperature data), and transmit the measured data together with position information to the CEP engine 21. The CEP engine 21 executes CEP (for example, a processing for analyzing the temperature distribution) on the event data that was received from the sensors, and outputs the execution results. In FIG. 6, three automobiles are illustrated, however, the number of automobiles is not limited.

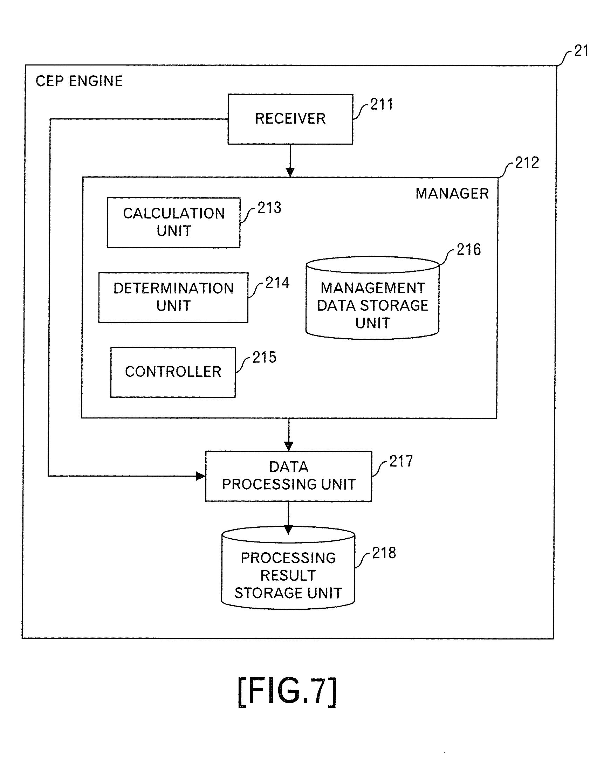

FIG. 7 illustrates the functional blocks of the CEP engine 21. In the example in FIG. 7, the CEP engine 21 includes a receiver 211, a manager 212, a data processing unit 217 and a processing result storage unit 218. Moreover, the manager 212 includes a calculation unit 213, a determination unit 214, a controller 215 and a management data storage unit 216.

The receiver 211 outputs data that was received from the sensors to the data processing unit 217 and manager 212. The data processing unit 217 executes CEP on the event data that was received from the sensors, and stores the execution results in the processing result storage unit 218. The calculation unit 213 uses the data received from the receiver 211 to perform a processing such as calculating an indicator value that will be described later, and updating the data that is stored in the management data storage unit 216. The determination unit 214 performs a processing such as determining, based on the indicator value that was calculated by the calculation unit 213, whether or not the transmission frequency of the measurement data is to be changed. The controller 215 performs a processing such as transmitting a flag for changing the transmission frequency, interrupt condition and restart condition to the sensors.

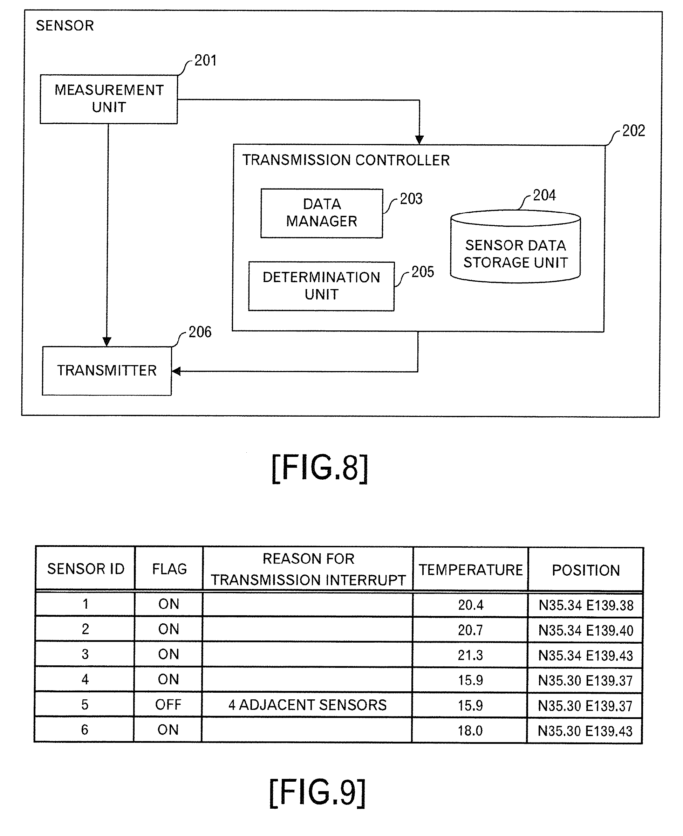

FIG. 8 illustrates the functional blocks of the sensors that are mounted in the automobiles 22 to 24. In the example in FIG. 8, a sensor includes a measurement unit 201, a transmission controller 202 and a transmitter 206. The transmission controller 202 includes a data manager 203, a sensor data storage unit 204 and a determination unit 205.

The measurement unit 201 measures event data, and outputs the event data to the transmission controller 202 and transmitter 206. The transmitter 206 transmits the event data that was measured by the measurement unit 201 to the CEP engine 21. The data manager 203 performs a processing for managing the data that is stored in the sensor data storage unit 204. The determination unit 205 performs a processing to determine whether the interrupt condition or restart condition that was received from the CEP engine 21 is satisfied. The sensor has a position information acquisition unit (not illustrated in the figure), and is able to acquire position information about the automobile from the position information acquisition unit.

FIG. 9 illustrates an example of data that is stored in the management data storage unit 216 in the CEP engine 21. In the example in FIG. 9, a sensor ID, flag, reason for transmission interrupt, temperature and position are stored.

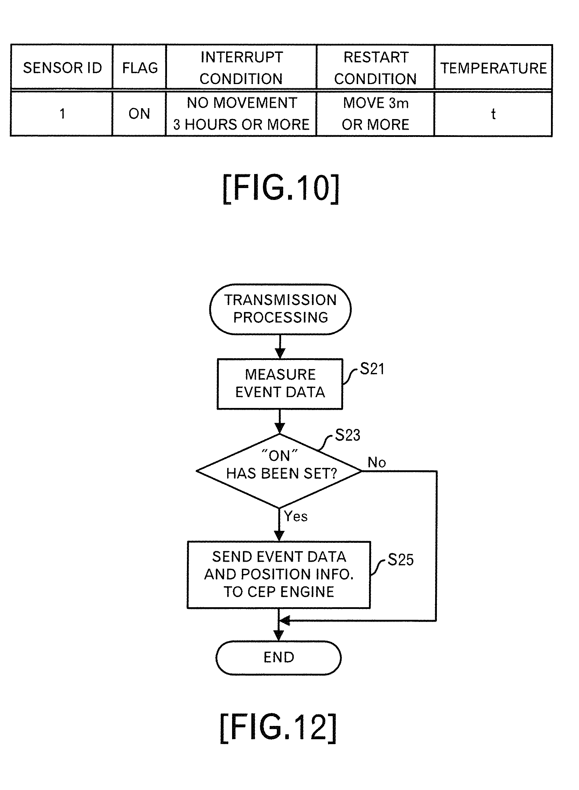

FIG. 10 illustrates an example of data that is stored in the sensor data storage unit 204 in a sensor. In the example in FIG. 10, a sensor ID, flag, interrupt condition, restart condition and temperature are set. Either of "ON" and "OFF" is set to the flag.

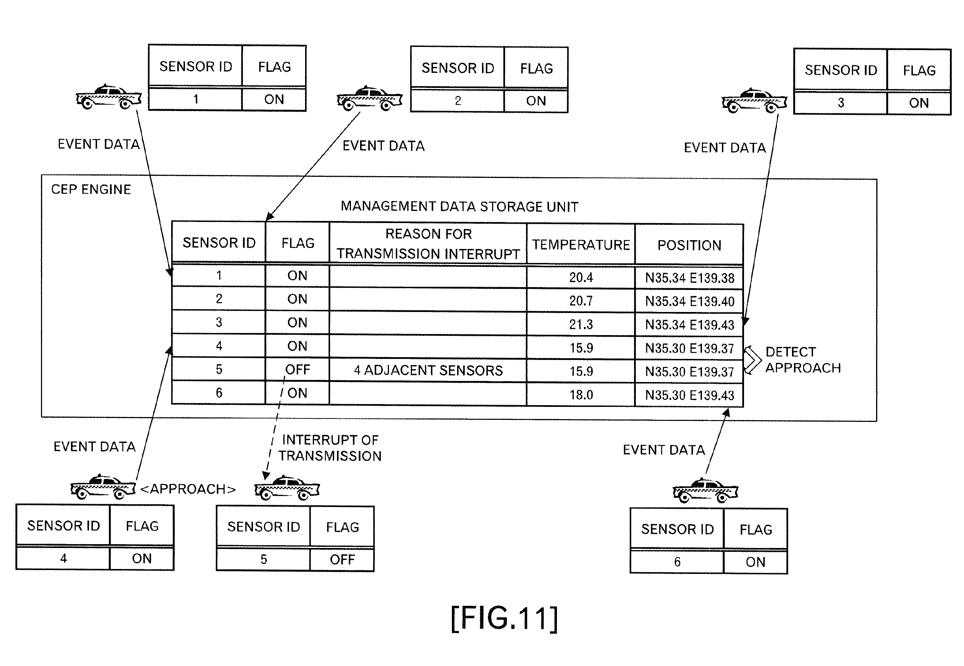

Next, the processing that is performed by the system illustrated in FIG. 6 will be explained using FIG. 11 to FIG. 16. First, an outline of the processing that is performed by the system illustrated in FIG. 6 will be explained using FIG. 11.

As illustrated in FIG. 11, in this embodiment, after measuring event data, a sensor transmits that event data together with position information to the CEP engine 21. The CEP engine 21 collects measurement data and position information from the sensors, and manages the measurement data and position information in the management data storage unit 216.

From the position information, the CEP engine 21 detects that the sensors come close to each other. In the example in FIG. 11, the CEP engine 21 detects that sensor 4 and sensor 5 are close to each other, so stops the transmission of event data from sensor 5. Here, the CEP engine 21 sets "OFF" to the flag for sensor 5 in the management data storage unit 216. Moreover, the sensor 5 sets "OFF" to the flag in the sensor data storage unit 204. In this way, the flags of the CEP engine 21 and the sensors are synchronized, and interruption of transmission is appropriately performed.

Next, the processing that is performed by the sensors that are mounted in the automobiles 22 to 24 will be explained using FIG. 12 to FIG. 14. First, the processing when event data is acquired will be explained. The measurement unit 201 in the sensor measures event data (for example, temperature data) (FIG. 12: Step S21). Then, the measurement unit 201 outputs the event data to the transmitter 206, and requests the data manager 203 to determine whether or not transmission is possible.

The data manager 203 then determines whether "ON" has been set to the flag in the sensor data storage unit 204 (FIG. 8) (Step S23). When it is determined that "ON" is not set to the flag (in other words, "OFF" is set) (step S23: NO route), transmission of the event data by the transmitter 206 is not performed, and the processing ends. However, when it is determined that "ON" has been set to the flag (step S23: YES route), the data manager 203 notifies the transmitter 206 that transmission is possible.

The transmitter 206 then transmits the event data and position information that was acquired from a position information acquisition unit to the CEP engine 21 (step S25). The processing then ends.

In this way, by checking the flag that is set in the sensor data storage unit 204 when event data is acquired, it is possible to determine whether or not it is possible to transmit the event data.

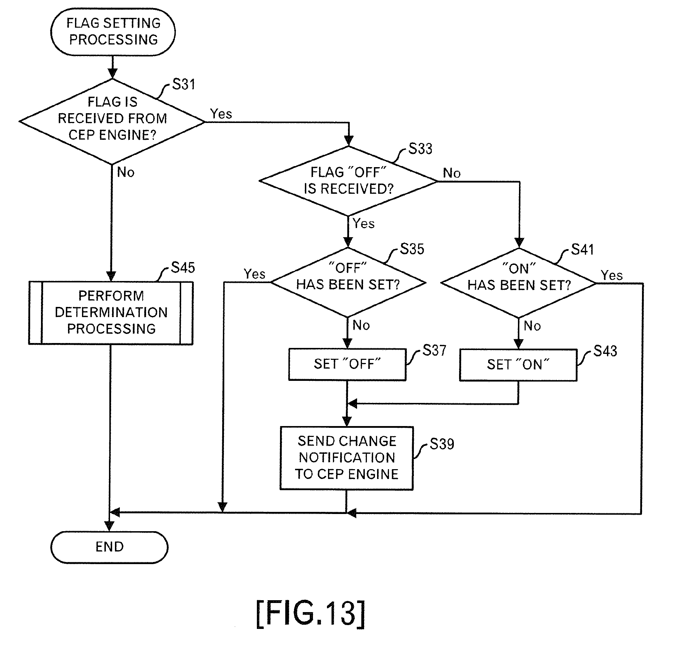

Next, the flag update processing will be explained. First, the data manager 203 determines whether a flag was received from the CEP engine 21 (FIG. 13: step S31). When it is determined that a flag was received from the CEP engine 21 (step S31: YES route), the data manager 203 determines whether or not a flag representing "OFF" was received (step S33). When it is determined that a flag representing "OFF" was received (step S33: YES route), the data manager 203 determines whether "OFF" is set to the flag in the sensor data storage unit 204 (step S35) . When "OFF" has been set to the flag (step S35: YES route), the data manager 203 does not change the flag, and the processing ends.

On the other hand, when it is determined that "OFF" is not set to the flag (in other words, "ON" is set) (step S35: NO route), the data manager 203 sets "OFF" to the flag in the sensor data storage unit 204 (step S37) . Then, the data manager 203 transmits a change notification that represents the sensor ID and that "OFF" is set to the flag to the CEP engine 21 (step S39). Then, the processing ends.

However, when a flag representing "OFF" is not received at the step S33 (step S33: NO route), a flag representing "ON" was received, so the data manager 203 determines whether or not "ON" has been set to the flag in the sensor data storage unit 204 (step S41) . When it is determined that "ON" has been set to the flag (step S41: YES route), the flag is not changed, and the processing ends.

On the other hand, when it is determined that "ON" is not set to the flag (in other words, "OFF" is set) (step S41: NO route), the data manager 203 sets "ON" to the flag in the sensor data storage unit 204 (step S43) . Moreover, the data manager 203 transmits a change notification representing the sensor ID and that "ON" was set to the flag to the CEP engine 21 (step S39) . The processing then ends.

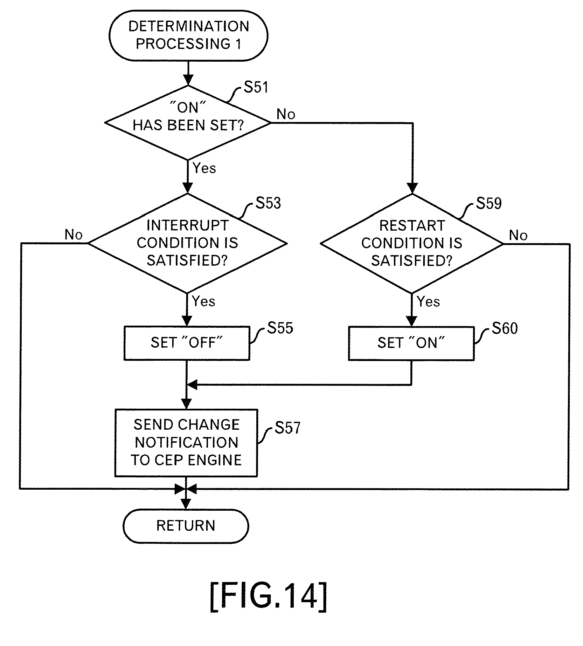

However, at the step S31, when it is determined that a flag has not been received from the CEP engine 21 (step S31: NO route), the determination unit 205 performs a determination processing (step S45). This determination processing will be explained using FIG. 14.

First, the determination unit 205 determines whether "ON" has been set to the flag in the sensor data storage unit 204 (FIG. 14: step S51) . When it is determined that "ON" has been set to the flag (step S51: YES route), the determination unit 205 determines whether an interrupt condition has been satisfied (step S53). When it is determined that the interrupt condition is not been satisfied (step S53 : NO route), the flag is not changed, and the processing returns to the calling-source processing.

As possible interrupt conditions, there are for example, a condition that "the automobile has been stopped for a predetermined amount of time or longer", a condition that "a predetermined amount of time or longer has elapsed since transmission was restarted", a condition that "the distance from the automobile to another automobile is a predetermined distance or less", a condition that "the automobile has moved outside a predetermined range" and the like. In this embodiment, such interrupt conditions have been received from the CEP engine 21 beforehand.

On the other hand, when it is determined that an interrupt condition has been satisfied (step S53: YES route), the determination unit 205 sets "OFF" to the flag in the sensor data storage unit 204 (step S55). The determination unit 205 then transmits a change notification that includes the sensor ID and represents that "OFF" was set to the flag to the CEP engine 21 (step S57), and the processing returns to the calling-source processing.

However, at the step S51, when it is determined that "ON" is not set to the flag (in other words, "OFF" is set) (step S51: NO route), the determination unit 205 determines whether or not a restart condition has been satisfied (step S59). When it is determined that a restart condition is not satisfied (step S59: NO route), the flag is not changed, so the processing returns to the calling-source processing.

As possible restart conditions, there are, for example, the condition that "a predetermined amount of time or greater has elapsed since transmission was interrupted", a condition that "the automobile has moved a predetermined distance or greater since transmission was interrupted", a condition that "the automobile is a predetermined distance or greater from another automobile", a condition that "the automobile made a right turn or a left turn", a condition that "the automobile is moving at a speed that is a predetermined speed or greater (therefore, it is estimated that the distance from the automobile to another automobile will soon be a predetermined distance or greater)" and the like. In this embodiment, such restart conditions are received from the CEP engine 21 beforehand.

At the step S59, when it is determined that a restart condition has been satisfied (step S59: YES route), the determination unit 205 sets "ON" to the flag in the sensor data storage unit 204 (stepS60). Moreover, the determination unit 205 transmits a change notification that includes the sensor ID and that represents that "ON" was set to the flag to the CEP engine 21 (step S57). The processing then returns to the calling-source processing.

When the transmission of the event data is restarted, it is not absolutely necessary for the determination unit 205 to transmit a change notification to the CEP engine 21. The CEP engine 21 will know that the flag has been changed by receiving event data.

By performing this kind of processing, it is possible for a sensor to autonomously determine when the transmission of the event data is interrupted or restarted.

Returning to the explanation of FIG. 13, after the determination processing (step S45) has ended, the flag setting processing ends.

By performing the processing such as described above, a flag is changed by a request from the CEP engine 21 or when an interrupt condition or restart condition is satisfied, and the amount of event data that a sensor transmits is appropriately controlled.

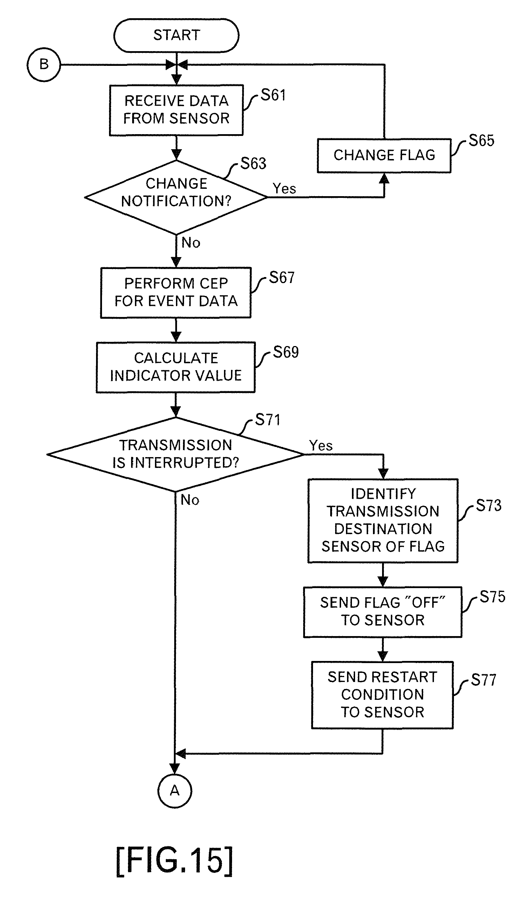

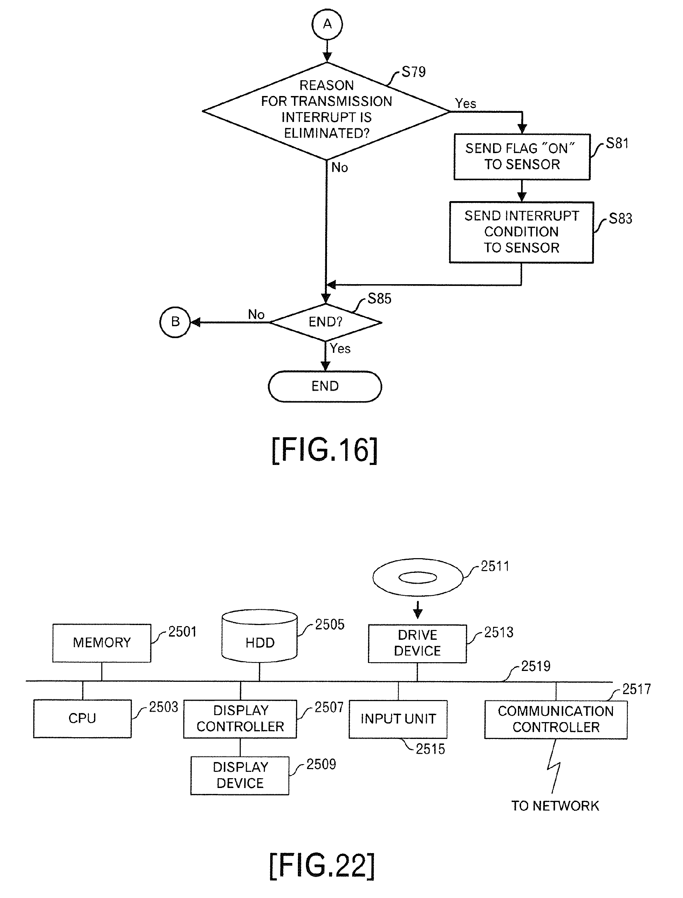

Next, a processing that is performed by the CEP engine 21 will be explained using FIG. 15 and FIG. 16. First, the receiver 211 of the CEP engine 21 receives data from one of the sensors that are mounted in the automobiles 22 to 24 (FIG. 15: step S61). Here, a change notification, or event data and position information are received. The receiver 211 outputs the received data to the calculation unit 213.

Then, the calculation unit 213 determines whether or not a change notification was received at the step S61 (step S63). When a change notification was received (step S63: YES route), the calculation unit 213 changes the flag in the management data storage unit 216 (FIG. 9), which corresponds to the sensor ID that is included in the change notification, according to the change notification (step S65), and then the processing returns to the processing of the step S61.

On the other hand, when a change notification is not received (in other words, event data and position information are received) (step S63: NO route), the calculation unit 213 requests the data processing unit 217 to perform the processing of the event data. The data processing unit 217 then executes the CEP on the event data (step S67), and stores the execution results in the processing result storage unit 218.

The calculation unit 213 also uses the position information that was received at the step S61 and the position information that is stored in the management data storage unit 216 to calculate an indicator value for the sensor position (step S69). The indicator value for the sensor position is, for example, "the distance between the sensor that is the transmission source of the position information that was received at the step S61 (hereafter, referred to as the transmission source sensor) and the sensor that is the closest to that transmission source sensor", "the density of the sensors within a predetermined range that is centered around the transmission source sensor" or the like. However, the indicator value for the sensor position is not limited to a value such as these. The calculation unit 213 outputs the calculated indicator value to the determination unit 214.

The determination unit 214 then determines whether or not the transmission of the event data from the transmission source sensor is to be interrupted, by comparing the indicator value that was calculated at the step S69 with a preset reference value (for example, a reference value related to distance, or a reference value related to density) (step S71). For example, when an indicator value related to the distance is less than a reference value, or in other words, when the distance between the transmission source sensor and the sensor that is closest to the transmission source sensor is equal to or less than a predetermined distance, the transmission of the event data is interrupted. Moreover, when an indicator value related to the density is greater than a reference value, or in other words, the density of sensors within a predetermined range centered around the transmission source sensor is equal to or greater than a reference value, the transmission of the event data is interrupted.

When it is determined that the transmission of the event data from the transmission source sensor will not be interrupted (step S71: NO route), the processing moves to step S79 in FIG. 16 via terminal A. When it is determined that the transmission of the event data from the transmission source sensor will be interrupted (step S71: YES route), the determination unit 214 identifies the transmission destination sensor to which "OFF" will be set (step S73) . The determination unit 214 notifies the controller 215 of the transmission interrupt of the event data and an identifier of the sensor that will interrupt the transmission.

The transmission destination sensor of the flagmaybe the transmission source sensor or a sensor that is closest to the transmission source sensor when the distance between the transmission source sensor and the sensor that is closest to the transmission source sensor is a predetermined distance or less. Moreover, when an indicator value related to the density is greater than a reference value, or in other words, when it is determined that the sensors are densely concentrated, one or plural typical sensors may be identified from among a group of sensors, and the transmission of the event data from sensors other than the identified sensor(s) may be interrupted.

The controller 215 then transmits a flag representing "OFF" to the sensors from which the transmission of the event data will be interrupted (step S75). Moreover, the controller 215 also transmits a restart condition for restarting the interrupted transmission of the event data to the sensors from which the transmission of the event data will be interrupted (step S77) . Furthermore, the controller 215 set "OFF" to the flag for sensors from which the transmission of the event data will be interrupted, in the management data storage unit 216. The processing then moves to step S79 in FIG. 16 via the terminal A.

Moving to an explanation of FIG. 16, the determination unit 214 determines for the sensors for which the reason of the transmission interruption has been registered in the management data storage unit 216 whether the reason of the transmission interruption has been eliminated (step S79). For example, the determination unit 214 measures the time from the beginning of the interruption, and determines whether a predetermined amount of time or more has elapsed.

When it is determined that the reason of the transmission interruption has been eliminated (step S79: YES route), the determination unit 214 notifies the controller 215 of the sensor(s) from which the transmission of the event data is to be restarted. The controller 215 then transmits a flag that represents "ON" to the sensor(s) from which the transmission of the event data is to be restarted (step S81). Moreover, the controller 215 transmits an interrupt condition for interrupting the transmission to the sensor(s) from which the transmission of event data is to be restarted (step S83). Furthermore, the controller 215 sets "ON" to the flag for the sensor (s) from which the transmission of the event data is to be interrupted, in the management data storage unit 216. The processing then moves to step S85.

On the other hand, when it is determined that the reason of the transmission interrupt has not been eliminated (step S79: NO route), the determination unit 214 determines whether the processing is to be ended (step S85) . For example, the determination unit 214 determines whether or not an end instruction is received from the manager of the CEP engine 21. When it is determined that the processing is not to be ended (step S85: NO route), the processing returns to the processing of the step S61 via terminal B. However, when it is determined that the processing is tobe ended (step S85 : YES route), the processing ends.

By performing the processing such as this, it becomes possible to appropriately control the amount of event data that is received from sensors.

### [Embodiment 3]

Next, a third embodiment will be explained. The third embodiment differs from the second embodiment in that a sensor does not determine whether or not an interrupt condition is satisfied. The other parts are the same as in the second embodiment.

Therefore, the CEP engine 21 does not perform the processing of the step S83 (in other words, processing of transmitting an interrupt condition to the sensors).

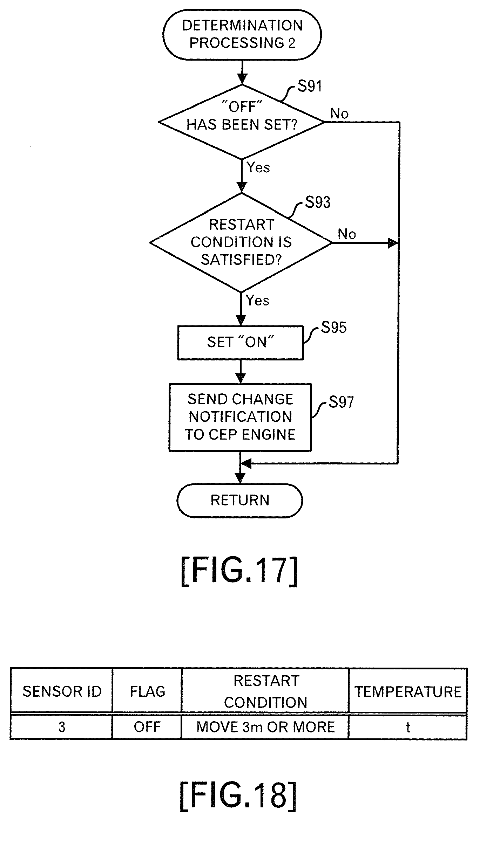

Moreover, as for the processing by a sensor, the contents of the determination processing is different compared with the second embodiment. Therefore, the determination processing of this third embodiment will be explained using FIG. 17 and FIG. 18.

First, the determination unit 205 determines whether "OFF" has been set to the flag in the sensor data storage unit 204 (FIG. 17: step S91). When it is determined that "OFF" has not been set to the flag (in other words, "ON" is set) (step S91: NO route), the flag will not be changed, so the processing returns to the calling-source processing.

In this third embodiment, data such as illustrated in FIG. 18 is stored in the sensor data storage unit 204. In the example in FIG. 18, the sensor ID, flag and restart condition and temperature are stored.

On the other hand, when it is determined that "OFF" has been set to the flag (step S91: YES route), the determination unit 205 determines whether or not the restart condition is satisfied (step S93). The restart condition is the same as described in the second embodiment.

When it is determined that the restart condition is not satisfied (step S93: NO route), the flag is not changed, and the processing returns to the calling-source processing.

However, when it is determined that the restart condition is satisfied (step S93: YES route), the determination unit 205 sets "ON" to the flag in the sensor data storage unit 204 (step S95) . The determination unit 205 also transmits a change notification that includes the sensor ID and that represents that "ON" has been set to the flag to the CEP engine 21 (step S97). The processing then returns to the calling-source processing.

In this way, it is possible to adequately control the amount of event data that is transmitted to the CEP engine 21 even though the sensor does not have a function for determining whether an interrupt condition is satisfied.

### [Embodiment 4]

Next, a fourth embodiment will be explained. The fourth embodiment differs from the second embodiment in that a sensor does not determine whether or not a restart condition is satisfied. The other parts are the same as in the second embodiment.

Therefore, the CEP engine 21 does not perform the processing of the step S77 (in other words, the processing of transmitting a restart condition to a sensor).

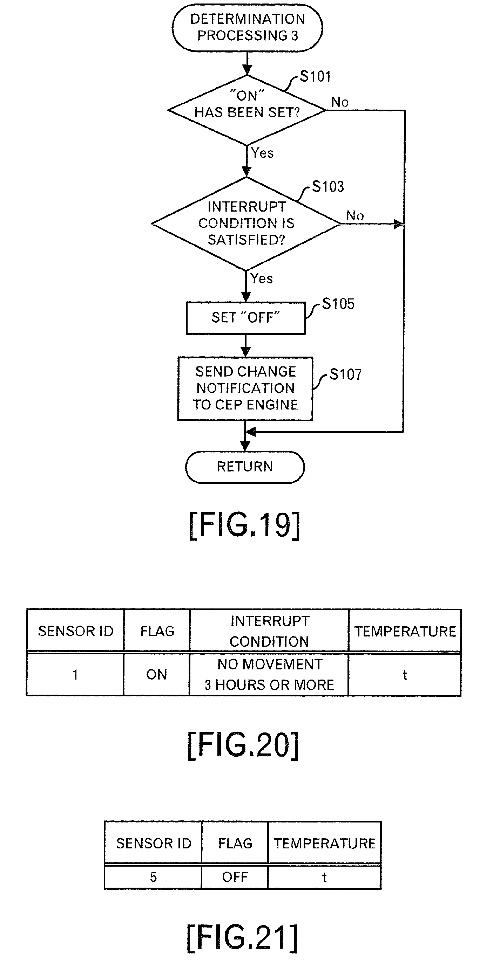

Moreover, as for the processing by the sensor, the contents of the determination processing is different compared with that of the second embodiment. Therefore, the determination processing of this fourth embodiment will be explained using FIG. 19 and FIG. 20.

First, the determination unit 205 determines whether "ON" has been set to the flag in the sensor data storage unit 204 (FIG. 19: step S101) . When it is determined that "ON" is not set to the flag (in other words, "OFF" is set) (step S101: NO route), the flag is not changed, and the processing returns to the calling-source processing.

In this fourth embodiment, data such as illustrated in FIG. 20 is stored in the sensor data storage unit 204. In the example in FIG. 20, the sensor ID, flag, interrupt conditions, and temperature are stored.

On the other hand, when it is determined that "ON" has been set to the flag (step S101: YES route), the determination unit 205 determines whether the interrupt condition is satisfied (step S103). The interrupt condition is the same as was described for the second embodiment.

When it is determined that the interrupt condition is not satisfied (step S103: NO route), the flag is not changed, and the processing returns to the calling-source processing.

However, when it is determined that the interrupt condition is satisfied (step S103: YES route), the determination unit 205 sets "OFF" to the flag in the sensor data storage unit 204 (step S105) . Moreover, the determination unit 205 transmits a change notification that includes the sensor ID and that represents that "OFF" is set to the flag to the CEP engine 21 (step S107) . Then, the processing returns to the calling-source processing.

In this way, it is possible to appropriately control the amount of data that is transmitted to the CEP engine 21 even when a sensor does not have a function of determining whether a restart condition is satisfied.

### [Embodiment 5]

Next, a fifth embodiment will be explained. This fifth embodiment differs from the second embodiment in that a sensor does not determine whether or not an interrupt condition or a restart condition is satisfied. The other parts are the same as for the second embodiment.

Therefore, the CEP engine 21 does not perform the processing of the step S77 (in other words, processing of transmitting a restart condition to a sensor), or the processing of the step S83 (in other words, processing of transmitting an interrupt condition to a sensor).

On the other hand, a sensor does not determine whether or not an interrupt condition or a restart condition is satisfied, so the determination processing at the step S45 is not performed. Therefore, in this fifth embodiment, data such as illustrated in FIG. 21 is stored in the sensor data storage unit 204. In the example in FIG. 21, the sensor ID, flag and temperature are stored.

In this way, the amount of event data that is transmitted is appropriately controlled without the sensor determining whether or not the f lag is to be changed, even though the CEP engine 21 completely controls the transmission frequency of the event data.

Although the embodiments of this technique were explained, this technique is not limited to those embodiments. For example, the functional block diagrams of the aforementioned computer 11, measurement devices 12 to 14 and CEP engine 21 and sensor may not always correspond to actual program module configurations.

Moreover, as for the aforementioned processing flow, as long as the processing results do not change, the turns of the steps may be exchanged, and plural steps may be executed in parallel.

In addition, in the embodiments 2 to 5, the example of the sensors mounted on the automobiles was explained, however, objects in which the sensors are mounted are not limited to the automobiles, and the embodiments may be applied to wireless phone or the like.

Furthermore, in the embodiments 2 to 5, "ON" or "OFF" is set to the flag to control the transmission frequency, however, the transmission frequency maybe adj ustedwith steps more than "2" such as changing the transmission frequency according to the distance with the closest sensor.

In addition, in the embodiments 2 to 5, the example in which the sensors move is explained, however, the embodiments may be applied to sensors which do not move. For example, when plural sensors that observe weather data at fixed points are arranged, the CEP engine may collect the measurement data and analyze the distribution of the measured values, and further determine whether or not the transmission frequency of the measurement data is changed, based on the analysis result.

Moreover, in the embodiments 2 to 5, in the determining whether or not the transmission of the event data by the sensors is interrupted, the indicator value for the position may not be used and condition such as date and time may be used. For example, the transmission frequency may be changed between the time range of the rush hour and the other time range, and the transmission frequency may be changed between the weekdays and holidays.

In addition, the aforementioned computer 11 and CEP engine 21 are computer devices as illustrated in FIG. 22. That is, a memory 2501 (storage device), aCPU2503 (processor), aharddiskdrive (HDD) 2505, adisplaycontroller 2507 connected to a display device 2509, a drive device 2513 for a removable disk 2511, an input unit 2515, and a communication controller 2517 for connection with a network are connected through a bus 2519 as illustrated in FIG.22. An operating system (OS) and an application program for carrying out the foregoing processing in the embodiment, are stored in the HDD 2505, and when executed by the CPU 2503, they are read out from the HDD 2505 to the memory 2501. As the need arises, the CPU 2503 controls the display controller 2507, the communication controller 2517, and the drive device 2513, and causes them to perform predetermined operations. Moreover, intermediate processing data is stored in the memory 2501, and if necessary, it is stored in the HDD 2505. In this embodiment of this technique, the application program to realize the aforementioned functions is stored in the computer-readable, non-transitory removable disk 2511 and distributed, and then it is installed into the HDD 2505 from the drive device 2513. It may be installed into the HDD 2505 via the network such as the Internet and the communication controller 2517. In the computer as stated above, the hardware such as the CPU 2503 and the memory 2501, the OS and the application programs systematically cooperate with each other, so that various functions as described above in details are realized.

The respective processing units illustrated in FIGs. 1 and 6 may be implemented by a combination of the CPU 2503 and programs, in other words, the CPU 2503 executing the programs. More specifically, when the CPU 2503 performs operations according to the programs stored in the HDD 2505 or memory 2501, the CPU 2503 may function aforementioned processing units. Moreover, the respective data storage units illustrated in FIGs. 1 and 6 may be achieved as the memory 2501 and/or HDD 2505 in FIG. 22.

The aforementioned embodiments are outlined as follows:

A communication control method relating to a first aspect of the embodiments includes: (A) receiving measurement data of one measurement device among plural measurement devices from the one measurement device; (B) calculating an indicator value that represents a relationship between the measurement data of the one measurement device and measurement data of the plural measurement devices; and (C) transmitting data for changing a transmission frequency of measurement data to at least one of the plural measurement devices, based on the calculated indicator value.

By performing such a processing, it becomes possible to appropriately control the amount of measurement data received from the measurement device. Accordingly, it is possible to reduce the useless processing cost in the computer, and effectively use the bandwidth in the network. Even when the measurement device is not moving, the transmission frequency may be changed based on deviation of the measurement values or the like. Moreover, the data for changing the transmission frequency of the measurement data may not be transmitted according to the calculated indicator value.

In addition, the aforementioned transmitting may include transmitting a condition to return the transmission frequency to an original transmission frequency to the at least one of the plural measurement devices. Accordingly, it is possible for the measurement device to autonomously determine whether or not the transmission frequency is returned to the original transmission frequency.

Moreover, the measurement data may include position information. Then, in the calculating, an indicator value concerning density of the measurement devices in a predetermined range that includes the one measurement device may be calculated by using position information of the one measurement device and position information of the plurality of measurement devices. Moreover, the transmitting may include determining whether or not the transmission frequency of the measurement data is to be changed, by comparing the calculated indicator value concerning the density with a reference value concerning the density. By performing such a processing, it is possible to efficiently receive the measurement data according to the state of the density of the measurement devices.

Moreover, the measurement data may include position information.Then, in the calculating, an indicator value concerning a distance between the one measurement device and a measurement device that is closest to the one measurement device may be calculated by using position information of the one measurement device and position information of the plurality of measurement devices. Moreover, the transmitting may include determining whether or not the transmission frequency of the measurement data is to be changed, by comparing the calculated indicator value concerning the distance with a reference value concerning the distance. By performing such a processing, it is possible to efficiently receive the measurement data according to the distance between the measurement devices.

Furthermore, the aforementioned communication control method may further include: upon determining that the transmission frequency of the measurement data is to be changed, identifying one or plural measurement devices from the predetermined range that includes the one measurement device. Then, in the aforementioned transmitting, data for changing the transmission frequency of the measurement data may be transmitted to the identified one or plural measurement device. By doing so, even when the sensors are concentrated, for example, it becomes possible to control the amount of received measurement data much flexibly.

Moreover, in the aforementioned transmitting, upon determining that the transmission frequency of the measurement data is to be changed, the data for changing the transmission frequency of the measurement data maybe transmitted to the one measurement device or the measurement device that is closest to the one measurement device. Because the measurement data transmitted from an adj acent measurement device or the measurement data transmitted from another adjacent measurement device may become meaningless, the measurement data can be received efficiently by performing such a processing.

Moreover, the condition may include any one of a condition concerning an elapsed time after the changing the transmission frequency, a condition concerning a movement distance after changing the transmission frequency, a condition concerning a movement velocity and a condition concerning a distance with another measurement device. According to such conditions, it is possible for the measurement device to determine whether or not the transmission frequency is returned to the original transmission frequency.

A communication control method relating to a second aspect of the embodiments include: (D) upon receiving data for changing a transmission frequency of measurement data from a computer that performs a processing to collect the measurement data, changing the transmission frequency of the measurement data according to the received data; (E) upon receiving a condition to return the transmission frequency to an original transmission frequency from the computer, monitoring whether or not the condition is satisfied; and (F) upon detecting that the condition has been satisfied, returning the transmission frequency to the original transmission frequency.

By performing the aforementioned processing, the change of the transmission frequency of the measurement data can be changed flexibly. Therefore, it is possible to reduce the useless processing cost in the computer, and to effectively use the bandwidth of the network.

A communication control method relating to a third aspect of the embodiments includes: (G) receiving measurement data of one measurement device among plural measurement devices from the one measurement device; (H) calculating an indicator value that represents a relationship between the measurement data of the one measurement device and measurement data of plural measurement devices; (I) determining whether or not a transmission frequency is to be changed, based on the calculated indicator value; and (J) upon determining that the transmission frequency of the measurement data is to be changed, transmitting data for changing the transmission frequency of the measurement data to at least one of the plural measurement devices.

Incidentally, it is possible to create a program causing a computer to execute the aforementioned processing, and such a program is stored in a computer readable storage medium or storage device such as a flexible disk, CD-ROM, DVD-ROM, magneto-optic disk, a semiconductor memory, and hard disk. Inaddition, the intermediate processing result is temporarily stored in a storage device such as a main memory or the like.

## Claims

1. A program for causing a computer to execute a process, comprising:
when receiving measurement data of one measurement device among a plurality of measurement devices from the one measurement device, calculating an indicator value that represents a relationship between the measurement data of the one measurement device and measurement data of the plurality of measurement devices; and
transmitting data for changing a transmission frequency of measurement data to at least one of the plurality of measurement devices, based on the calculated indicator value.

2. The program as set forth in claim 1, wherein the transmitting comprises transmitting a condition to return the transmission frequency to an original transmission frequency to the at least one of the plurality of measurement devices.

3. The program as set forth in claim 1 or 2, wherein the measurement data includes position information, and in the calculating, an indicator value concerning density of the measurement devices in a predetermined range that includes the one measurement device is calculated by using position information of the one measurement device and position information of the plurality of measurement devices, and the transmitting comprises determining whether or not the transmission frequency of the measurement data is to be changed, by comparing the calculated indicator value concerning the density with a reference value concerning the density.

4. The program as set forth in claim 1 or 2, wherein the measurement data includes position information, and in the calculating, an indicator value concerning a distance between the one measurement device and a measurement device that is closest to the one measurement device is calculated by using position information of the one measurement device and position information of the plurality of measurement devices, and the transmitting comprises determining whether or not the transmission frequency of the measurement data is to be changed, by comparing the calculated indicator value concerning the distance with a reference value concerning the distance.

5. The program as set forth in claim 3, wherein the process further comprises:
upon determining that the transmission frequency of the measurement data is to be changed, identifying one or plural measurement devices from the predetermined range that includes the one measurement device, and
in the transmitting, data for changing the transmission frequency of the measurement data is transmitted to the identified one or plural measurement device.

6. The program as set forth in claim 4, wherein, in the transmitting, upon determining that the transmission frequency of the measurement data is to be changed, the data for changing the transmission frequency of the measurement data is transmitted to the one measurement device or the measurement device that is closest to the one measurement device.

7. The program as set forth in any one of claims 2 to 6, wherein the condition includes any one of a condition concerning an elapsed time after the changing the transmission frequency, a condition concerning a movement distance after changing the transmission frequency, a condition concerning a movement velocity and a condition concerning a distance with another measurement device.

8. A program for causing a measurement device to execute a process, comprising:
upon receiving data for changing a transmission frequency of measurement data from a computer that performs a processing to collect the measurement data, changing the transmission frequency of the measurement data according to the received data;
upon receiving a condition to return the transmission frequency to an original transmission frequency from the computer, monitoring whether or not the condition is satisfied; and
upon detecting that the condition has been satisfied, returning the transmission frequency to the original transmission frequency.

9. A communication control method executed by a computer, comprising:
receiving measurement data of one measurement device among a plurality of measurement devices from the one measurement device;
calculating an indicator value that represents a relationship between the measurement data of the one measurement device and measurement data of the plurality of measurement devices; and
transmitting data for changing a transmission frequency of measurement data to at least one of the plurality of measurement devices, based on the calculated indicator value.

10. A communication control apparatus, comprising:
a first processing unit to receive measurement data of one measurement device among a plurality of measurement devices from the one measurement device;
a secondprocessing unit to calculate an indicatorvalue that represents a relationship between the measurement data of the one measurement device and measurement data of the plurality of measurement devices; and
a third processing unit to transmit data for changing a transmission frequency of measurement data to at least one of the plurality of measurement devices, based on the calculated indicator value.

11. A communication control method executed by a measurement device, comprising:
upon receiving data for changing a transmission frequency of measurement data from a computer that performs a processing to collect the measurement data, changing the transmission frequency of the measurement data according to the received data;
upon receiving a condition to return the transmission frequency to an original transmission frequency from the computer, monitoring whether or not the condition is satisfied; and
upon detecting that the condition has been satisfied, returning the transmission frequency to the original transmission frequency.

12. A measurement device, comprising:
a first change unit to change, upon receiving data for changing a transmission frequency of measurement data from a computer that performs a processing to collect the measurement data, the transmission frequency of the measurement data according to the received data;
a monitor unit to monitor, upon receiving a condition to return the transmission frequency to an original transmission frequency from the computer, whether or not the condition is satisfied; and
a second change unit to return, upon detecting that the condition has been satisfied, the transmission frequency to the original transmission frequency.
